# EUROPEAN PATENT APPLICATION

(11) **EP 1 777 421 A1**
(43) Date of publication of application: **25.04.2007**
(21) Application number: 06122132.1
(22) Date of filing: 11.10.2006
(51) Int. Cl.: F16B 2/22, A61H 3/02, A45B 9/00

(54) **Stick holder**

(30) Priority: 20.10.2005 SE 0502327
(71) Applicant: Dahl, Bertil, 21562 Malmö (SE)
(72) Inventor: Dahl, Bertil, 21562 Malmö (SE)
(74) Representative: Örtenblad, Bertil Tore

(57) **Abstract**

A holder for a walking stick, crutch or other similar stick, which holder is attached to the shaft of the stick (2) in a manner that allows it to be removed.

The invention is characterised in that the holder (1) comprises a first part (3) that is essentially tube-shaped in cross-section, comprising two first shanks (5, 6) that are sprung in a direction towards each other, arranged to be threaded onto the stick (2) and to remain in place in the direction along the longitudinal axis of the stick (2) through the action of the spring force and friction, in that a second part (4) that is essentially tube-shaped in cross-section is present attached to the said first part (3), which second part (4) comprises in a similar manner two second shanks (7, 8) sprung in a direction towards each other, in that the said second shanks (7, 8) are located in a plane that is perpendicular to the plane in which the shanks (5, 6) of the first part (3) are located, and in that the shanks (7, 8) of the second part (4) are arranged to be separated from each other against the spring force in order to grip onto an object, such as the edge of a table-top.

## Description

The present invention relates to a holder for a walking stick, a crutch, or other similar stick.

### The Prior Art

Many people use sticks to support themselves, to avoid falling over, or for reducing the load on the body during, for example, various activities such as walking. It is estimated that approximately 1 million such sticks can be found in Sweden.

For example, many people with reduced physical mobility use crutches when they rise, stand and walk. Either one or two such crutches may be used, depending on the nature of the reduction in physical mobility, and other factors.

Furthermore, many people use other kinds of stick, for example, walking sticks, rambling sticks, etc. Such sticks are used to obtain a reduction in load or better balance while the user is carrying out various activities.

Common to all of the sticks described above is the fact that they consist in general of an extended shaft in the form of a stick, intended to absorb a part of the load to which the user's body is subjected, and a grip, which makes it possible for the user to hold the stick and to use it for support. The stick may comprise further parts in addition to this, such as, for example, a special foot that is placed in direct contact with the ground while the stick is in use, where it offers optimal conditions with respect to friction against the ground, etc., for the user.

It is not possible for the sticks to be placed upright without support, due to the essentially extended design and the small base of these sticks. Furthermore, the centre of gravity is often located in such a manner that they often fall if the user, for example, leans the stick against a wall or similar.

This is a serious problem for many users, since they often have, as has been mentioned, reduced physical mobility, and this makes it difficult or even impossible, in certain cases, to pick up such a fallen stick from the floor or the ground. The problem is also present when the stick is stored when it is not being used at the moment, since it may be difficult for a user to find a location to place the stick such that there is no risk of it falling.

### Description of the Present Invention

The present invention solves the problems described above.

The present invention thus concerns a holder for a walking stick, crutch or other similar stick, which holder is attached to the shaft of the stick in a manner that allows it to be removed, and the invention is characterised in that the holder comprises a first part that is essentially tube-shaped in cross-section, comprising two first shanks that are sprung in a direction towards each other, arranged to be threaded onto the stick and to remain in place in the direction along the longitudinal axis of the stick through the action of the spring force and friction, in that a second part that is essentially tube-shaped in cross-section is present attached to the said first part, which second part comprises in a similar manner two second shanks that are sprung in a direction towards each other, in that the said second shanks are located in a plane that is perpendicular to the plane in which the shanks of the first part are located, and in that the shanks of the second part are arranged to be separated from each other against the spring force in order to grip onto an object, such as the edge of a table-top.

The invention will be described in more detail below, partially with reference to embodiments of the invention and with reference to the attached drawings:
Figure 1 is a perspective view of a first embodiment of the present invention.
Figure 2 is a perspective view of a second embodiment of the present invention.
Figure 3 is a perspective view of a third embodiment of the present invention.

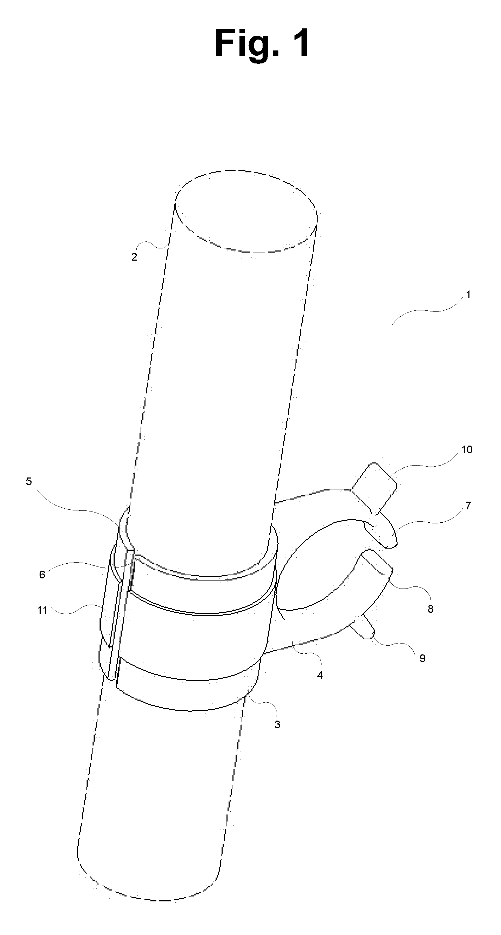

Figure 1 shows a first preferred embodiment of the present invention. It shows a holder 1, comprising a first part 3 that is essentially tube-shaped, and a second part 4 that is essentially tube-shaped. The first part 3 is arranged to comprise a longitudinal groove that extends along the central axis of the first part 3, and this results in the formation of two shanks 5, 6. These shanks 5, 6 of the first part 3 are arranged to have a resistive spring force when they are drawn from each other. This spring property can, naturally, be obtained in many different ways. In the present embodiment, however, a sprung metallic strip 11 is arranged to run along both shanks 5, 6 of the first part 3, around the full outer perimeter of the first part 3, except for at the previously mentioned groove, where also the sprung metal strip is arranged to have a corresponding groove. The metal strip 11 thus increases the spring force that is obtained from the shanks 5, 6 when these are separated.

The two shanks 5, 6 are arranged such that they can receive a walking stick, a crutch or similar stick, 2, such that the stick runs inside of the essentially tube-shaped inner space of the first part 3. Through the inner diameter of the first part 3 being arranged to be somewhat smaller than the outer diameter of the stick 2, the shanks 5, 6 will retain the stick 2 in place in the longitudinal direction of the stick 2 through the spring force and friction, when the stick 2 is placed such that it passes through the inner space of the first part 3. The shanks 5, 6 are at the same time arranged such that they can be sprung back to the extent that is required to be able to remove simply the stick 2 from the first part 3. Thus, the first part 3 is arranged such that it is possible to remove it and to reattach it to the stick 2.

A second essentially tube-shaped part 4 is, as has been described above, arranged at the first part 3. The second part 4 is arranged to lie in a plane that is perpendicular to the plane of the first part 3, such that also the central axes of the two parts 3, 4 are perpendicular to each other. The second part 4 is arranged, as is the first part 3, to have a longitudinal groove, and this gives rise to two shanks 7, 8 that resist by a spring force when they are separated.

By applying an expansive force to the shanks 7, 8 of the second part 4, the user of the present holder 1 can separate the shanks 7, 8. When the shanks 7, 8 have been separated in this manner, an object, such as a table-top, a window sill, or similar, can be introduced between the shanks 7, 8, such that the object passes into the inner part of the second part 4. The user can subsequently release the expansive force, whereby the shanks 7, 8 again attempt to be reunited through the spring force, and in this manner hold the object in a fixed grip through the spring force and friction.

In order to make it easier for the user of the present invention 1 to separate the shanks 7, 8, a protrusion 9, 10 is located on each of the shanks 7, 8 of the second part 4. These protrusions 9, 10 are dimensionally arranged such that they increase the force of leverage with which the force of the user is applied to the shanks 7, 8 when these are to be separated. This is important due to the physical disabilities that users of the present invention often possess, as has been described above.

Thus the second part 4 is arranged such that it can be removed and reattached to an object such as a table-top or similar.

When the stick 2 is attached to the first part 3, the user of the present embodiment of the present invention can thus rapidly and comfortably attach the stick 2 to, for example, a table-top, by using the protrusions 9, 10. The stick will in this manner remain in place in an essentially vertical position on the table-top until it is again required, whereby the user can easily remove the stick from the table-top by reuse of the protrusions 9, 10. The holder 1 can thus remain attached in place on the stick 2 during the complete period of use.

Typical sticks 2 that can be attached in a manner that allows removal and reattachment to the first part 3 according to the present preferred embodiment have an outer diameter that lies between 16 and 26 mm. Typical objects to which the second part 4 can be attached according to the present preferred embodiment are flat, such as, for example, a table-top, with a thickness that lies between 16 and 30 mm. It should, however, be obvious for one skilled in the art that it is possible to use also other dimensions of sticks and objects with the present invention, depending on the dimensions of the shanks 5, 6, 7, 8.

It is preferable that the first part 3 and the second part 4 are manufactured from a plastic or rubber material, but it is possible to use also other suitable materials, such as, for example, metallic materials.

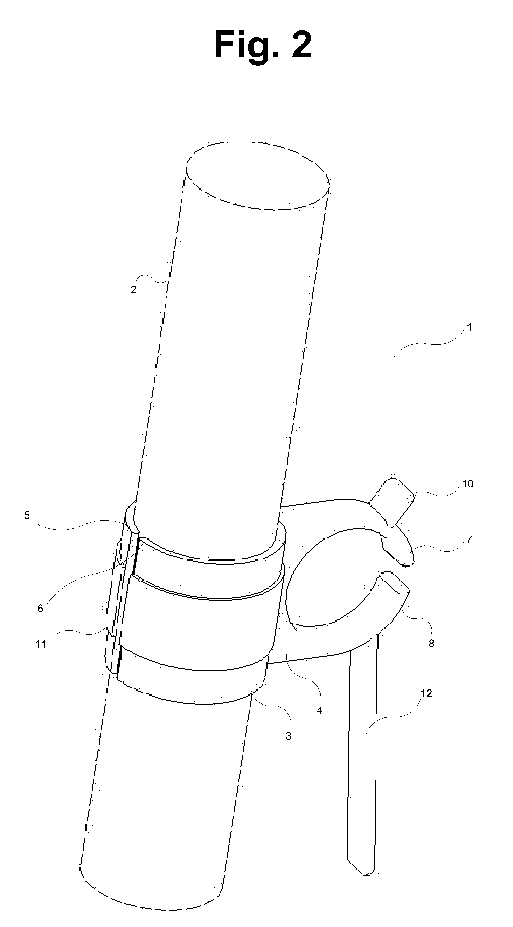

Figure 2 shows a second preferred embodiment of the present invention. The reference numbers are the same as those in Figure 1.

In this second preferred embodiment, the first part 3 is attached, in a manner that allows its removal and reattachment as has been described above, to the stick 2 at such a location that the combined centre of gravity of the stick 2 and the holder 1 is located closer to the grip (upper end) of the stick than the foot (lower end) of the stick. Furthermore, one of the shanks 8 is arranged to comprise a longer protrusion 12, which extends outwards from the second part 4, essentially parallel with the stick 2. When the first part 3 is attached to the stick 2 as has been described above, this longer protrusion 12 can be used in order to suspend the present holder 1, and in this way, since the first part 3 is attached to the stick 2, also the stick 2. Such a suspension can, for example, take place through hooking the holder 1, by means of the longer protrusion 12, onto the rear surface of a chair-back, onto a hand-rail, onto a hat-rack, etc. Since the longer protrusion 12 lies essentially parallel with the stick 2, when it is suspended, the stick 2 will hang essentially vertically, and this, due to the location of the combined centre of gravity of the stick 2 and the holder 1 described above, guarantees that it will not fall down from the item on which it is suspended.

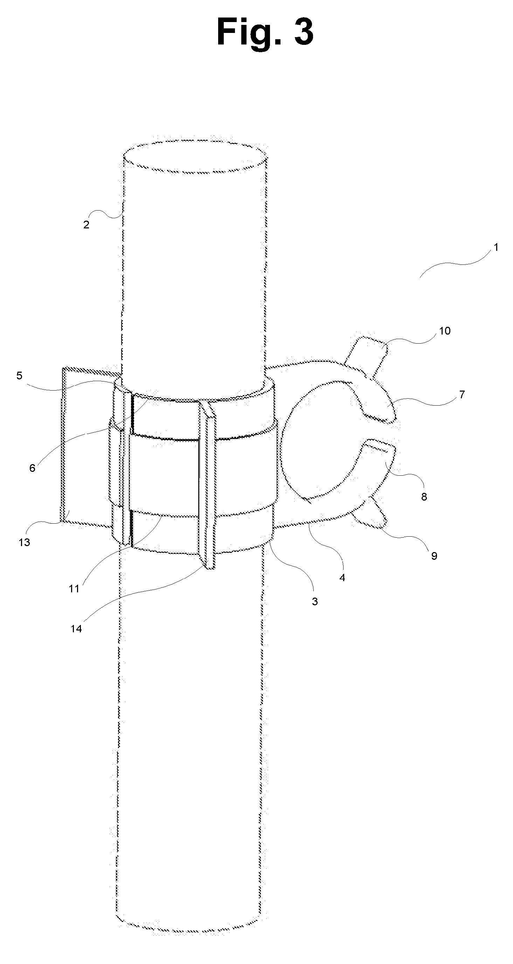

Figure 3 shows a third preferred embodiment according to the present invention. The reference numbers are again the same as those in Figure 1 and Figure 2.

In this third preferred embodiment the first part 1 of the stick holder is equipped with protrusions 13, 14, similar to the protrusions 9, 10 of the second part 4 of the stick holder 1, that the user can use in order to separate more easily the shanks 5, 6 of the first part 3 from each other, against the spring force, when the first part 3 of the stick holder 1 is to be attached or removed from the stick 2.

The embodiments that have been described in this application are, of course, to be regarded as providing examples. It should be obvious for one skilled in the art that other embodiments are possible.

## Claims

1. A holder for a walking stick, crutch or other similar stick, which holder is attached to the shaft of the stick in a manner that allows it to be removed, **characterised in that** the holder (1) comprises a first part (3) that is essentially tube-shaped in cross-section, comprising two first shanks (5, 6) that are sprung in a direction towards each other, arranged to be threaded onto the stick (2) and to remain in place in the direction along the longitudinal axis of the stick (2) through the action of the spring force and friction, **in that** a second part (4) that is essentially tube-shaped in cross-section is present attached to the said first part (3), which second part (4) comprises in a similar manner two second shanks (7, 8) sprung in a direction towards each other, **in that** the said second shanks (7, 8) are located in a plane that is perpendicular to the plane in which the shanks (5, 6) of the first part (3) are located, and **in that** the shanks (7, 8) of the second part (4) are arranged to be separated from each other against the spring force in order to grip onto an object, such as the edge of a table-top.

2. The holder according to claim 1, **characterised in that** the said second part (4) comprises two protrusions (9, 10), arranged on the outer surface of each of the shanks (7, 8) of the second part (4), and **in that** the protrusions (9, 10) thus can be used to separate the shanks (7, 8) of the said second part (4) from each other.

3. The holder according to claim 1 or 2, **characterised in that** the said second part (4) comprises a protrusion (12) arranged such that the stick (2), when it has been attached by means of the holder (1), can be suspended from, for example, a chair-back.

4. The holder according to any one of the preceding claims, **characterised in that** the said first part (3) comprises two protrusions (13, 14), arranged on the outer surface of each one of the shanks (5, 6) of the first part (3), and **in that** the protrusions (13, 14) thus can be used in order to separate the shanks (5, 6) of the first part (3) from each other against the spring force.
